# EUROPEAN PATENT SPECIFICATION

(11) **EP 4 065 938 B1**
(45) Date of publication and mention of the grant of the patent: **25.10.2023**
(21) Application number: 20815969.9
(22) Date of filing: 16.11.2020
(51) Int. Cl.: G01H 1/12, G01N 29/11, G01N 29/34, G01N 29/44

(54) **APPARATUS FOR MONITORING MECHANICAL INTEGRITY OF AN EYE-SAFETY COMPONENT OF AN ILLUMINATOR**
VORRICHTUNG ZUR ÜBERWACHUNG DER MECHANISCHEN INTEGRITÄT EINER AUGENSICHERHEITSKOMPONENTE EINER BELEUCHTUNGSVORRICHTUNG
APPAREIL DE SURVEILLANCE D'INTÉGRITÉ MÉCANIQUE D'UN ÉLÉMENT DE SÉCURITÉ OCULAIRE D'UN ILLUMINATEUR

(30) Priority: 29.11.2019 US 201962941966 P
(43) Date of publication of application: 05.10.2022
(73) Proprietor: AMS Sensors Singapore Pte. Ltd., Singapore 569877 (SG)
(72) Inventor: MIGUEL SÁNCHEZ, Javier, 5656 AE Eindhoven (NL)
(74) Representative: Ding, Yuan
(86) International application number: PCT/SG2020/050665
(87) International publication number: WO 2021/107863

(56) References cited:
- US-A1- 2016 266 070
- US-A1- 2018 117 642
- US-A1- 2018 329 205

## Description

### Technical Field of the Disclosure

The disclosure relates to an apparatus and method for monitoring mechanical integrity of an eye-safety component of an illuminator. The disclosure also relates to an illuminator incorporating the apparatus and a device incorporating the illuminator.

### Background of the Disclosure

There is a current trend of using three-dimensional sensing for face recognition and world facing applications. Such sensing systems require illuminators to flood the subjects to be imaged with light and often employ high power lasers. When the laser is packaged correctly in a suitable optics module, it is eye-safe. However, if the module integrity is compromised, the illuminator may no longer be eye-safe and, in which case, there is a demand for an interlock to trigger an eye-safety mechanism.

To date, the integrity of an illuminator module has been assessed using a photodiode back reflection from the cover optics or using an indium tin oxide (ITO) layer on the cover optics and measuring either capacitance or DC resistance of the ITO layer.

More specifically, a capacitive sensor is used to detect a change in capacitance resulting from a crack in the coated cover optics, which in turn may lead to eye damage. However, the presence of large currents (e.g. up to 3A) for driving the laser in an illuminator in very short pulses (>100 MHz) make measurement of small values (typically around 1pF) associated with the capacitance of the ITO layer extremely difficult.

It is possible to check the DC resistivity of a resistive sensor in order to check the integrity of the cover optics where the conductive ITO layer is provided. However, the conductive ITO layer must be outside of the field of illumination so any damage to the portion of the cover optics, which is not coated, may not be detected. In addition, the use of a DC resistivity measurement can be compromised by a natural high noise environment due to electromagnetic interference (EMI), especially if a DC threshold readout is used.

Another example is the patent application publication US2016/0266070 disclosing a method and apparatus for determining the spatial position of damage on a glass body, in particular on a windshield of a vehicle, comprising at least one structure-borne sound sensor and at least one evaluation unit, further the spatial position of a signal source of at least one structure-borne sound signal generated by means of a damage is detected and the spatial position of the damage is derived from the spatial position of the signal source.

The patent application publication US2018/0117642 discloses lens cleaning systems, drivers and methods to detect faults or degradation in a lens cleaning system, including a controller to control a lens transducer drive signal frequency to vibrate the lens in a frequency range of interest and measure frequency response values according to driver feedback signals, and to compare the measured frequency response values to baseline frequency response values for a healthy system, and to selectively determine the existence of a fault or degradation in the lens cleaning system according to dissimilarities between the measured frequency response values and the baseline frequency response values.

It is therefore an aim of the present disclosure to provide an apparatus and method for monitoring mechanical integrity of an eye-safety component of an illuminator, which address one or more of the problems above or at least provides a useful alternative.

### Summary

In general, this disclosure proposes to overcome the above problems by using vibrations to probe the mechanical properties of the cover optics, thereby directly monitoring the integrity of the eye-safety component in the area being illuminated. According to one aspect of the present disclosure, there is provided an apparatus for monitoring mechanical integrity of an eye-safety component of an illuminator, the apparatus comprising:
a transducer operable to generate a vibration in the eye-safety component; and
a sensor operable to sense the vibration in the eye-safety component and to output a signal representative of the sensed vibration; and
a processor operable to:
   monitor the signal from the sensor;
   determine if the signal comprises at least one parameter that falls outside of a pre-determined acceptable range, the pre-determined acceptable range being indicative of mechanical integrity of the eye-safety component; and
   initiate a safety action in response to a determination that the at least one parameter falls outside of the pre-determined acceptable range thereby indicating a loss of mechanical integrity.

Thus, embodiments of this disclosure provide an apparatus for monitoring mechanical integrity of an eye-safety component of an illuminator, which can be used to provide a safety interlock, which is triggered when the vibration signal changes in response to a mechanical change in the eye-safety component itself. As the vibration is generated by a transducer acting on the eye-safety component, the apparatus can monitor the portion of the eye-safety component through which the light travels thereby probing the mechanical integrity of the medium in the precise region where eye safety is critical.

This is in contrast to prior art systems where any monitoring is performed by probing electrical signals from areas that are close to but not co-existent with the critical eye-safety components. In addition, aspects of the disclosure allow for continuous monitoring of window integrity in an illuminator via continuous transducer actuation.

In some embodiments, the vibration will result directly from operation of the transducer such that the vibration is synchronised with operation of the transducer. Accordingly, if the transducer is pulsed, the vibration will also be in the form of a pulsed signal within a well-defined detection window. In another embodiment, the vibration may result from continuous operation of the transducer. In some embodiments the transducer may have a vibration frequency which can be modulated to sweep a range of frequencies or to probe particular frequencies.

Accordingly, aspects of the present disclosure provide an apparatus for monitoring mechanical integrity of an eye-safety component, such as those present in illuminators configured for 3D sensing applications, and for initiating a safety action in response to a loss in integrity thereby providing a safety interlock.

The transducer may also be the sensor. In other words, the transducer and the sensor may be formed as a single component which is capable of both generating a vibration and sensing a vibration.

A phononic structure may be configured to improve a signal-to-noise ratio for the sensed vibration. In other words, the phononic structure may enhance a signal, created by the transducer, in the eye-safety component itself or in a path leading from the eye-safety component to the sensor. In some embodiments, the phononic structure may be provided in, on, at, adjacent, around or interlaced with the eye-safety component (i.e. the phononic structure may be separate to or integrated in structures forming the eye-safety component).

The processor may be further operable to detect a change in environmental conditions within the illuminator based on the signal from the sensor.

The processor may be operable to initiate the safety action by transmitting an instruction to the illuminator to modify an intensity of illumination.

The processor may be operable to initiate the safety action by transmitting an instruction to the illuminator to cease illumination. Thus, the apparatus may be configured for automatic power control of the illuminator.

The sensor may comprise at least one microphone, ultrasonic transducer, piezoelectric transducer, or resonant ultrasound spectroscopic sensor. In some embodiments, multiple microphones may be employed with each one configured to sense a different area of the eye-safety component and/or tuned to sense different mechanical vibration resonances. In some embodiments, multiple ultrasonic transducers, piezoelectric transducers, or resonant ultrasound spectroscopic sensors may be employed with each one configured to probe a different area of the eye-safety component or tuned to sense different mechanical vibration resonances.

The vibration may be at a pre-determined frequency such that the processor is operable to use the pre-determined frequency in a lock-in detection method and/or a gated detection method when monitoring the signal from the sensor.

The apparatus may further comprise one or more of: a signal generator, an amplifier; a filter; a lock-in detector; and an acceptable range detector.

The signal generator may be configured to generate a saw tooth, square wave, sinusoid, or an arbitrary waveform. The filter may be a low-pass, high-pass, or notch filter. The filter may be an absorption, interference, or dichroic filter.

According to a second aspect of this disclosure, there is provided an illuminator comprising:
at least one emitter;
an eye-safety component providing a shield between the at least one emitter and a user; and
the apparatus according to the first aspect of the disclosure.

The sensor may be arranged to sense the vibration in the eye-safety component directly.

The sensor may be arranged to sense the vibration in the eye-safety component indirectly by receiving an input via a waveguide or other medium.

The at least one emitter may comprise a laser.

The eye-safety component may comprise a glass substrate and/or a diffuser.

The illuminator may be provided in a package or module. The package or module may be airtight or hermetic. A hermetic package may contain a well-defined fluid (e.g. gas) through which the vibration travels such that any leaks or ingression (e.g. of water or other fluids) may be detected by a change in the signal.

The processor may be included in the package/module or may be provided externally, for example, elsewhere in a device incorporating the illuminator. Where an external processor is used, it will be configured for communication with the sensor and emitter, at least.

The sensor (e.g. microphone) may be located on or close to the eye-safety component to ensure a quick response and good signal quality. The sensor may be provided (i.e. secured in place) on a portion of the eye-safety component (e.g. diffuser or glass substrate) and metallic traces provided to route electrical signals from the sensor to an edge of the package and along sidewalls to a substrate on which the processor and/or emitter is located.

In some embodiments, a phononic or acoustic filter may be provided (e.g. on the eye-safety component or elsewhere in the package) to maximize the vibration signal strength along a path to the sensor.

The sensor may be provided in a general integrated circuit (IC) or an application-specific integrated circuit (ASIC) together with other components for example, for performing the functions of amplifying, filtering, lock-in detection, threshold detection and signalling output for the safety action.

According to a third aspect of this disclosure, there is provided a device comprising an apparatus according to the first aspect of the disclosure or an illuminator according to the second aspect of the disclosure.

According to a fourth aspect of this disclosure, there is provided a method for monitoring mechanical integrity of an eye-safety component of an illuminator, the method comprising:
operating a transducer to generate a vibration in the eye-safety component;
obtaining, from a sensor, a signal representative of a sensed vibration in the eye-safety component;
monitoring the signal;
determining if the signal comprises at least one parameter that falls outside of a pre-determined acceptable range, the pre-determined acceptable range being indicative of mechanical integrity of the eye-safety component; and
initiating a safety action in response to a determination that the at least one parameter falls outside of the pre-determined acceptable range thereby indicating a loss of mechanical integrity.

The method may further comprise establishing the pre-determined acceptable range (e.g. threshold value).

The pre-determined acceptable range may be established by a controller, which may be provided in the illuminator or external thereof (for example, in a host device).

The pre-determined acceptable range may be based on predefined values stored in a memory and/or defined during a calibration step. The predefined values may comprise one or more parameters, which may be adjusted during the calibration step. For example, the parameters may comprise signal amplitude, signal frequency or signal wavelength.

The pre-determined acceptable range may be established using an artificial neural network (ANN).

According to a fifth aspect of this disclosure, there is provided a non-transitory computer-readable medium having stored thereon program instructions for causing at least one processor to perform the method according to the fourth aspect of the disclosure.

As discussed above, prior art systems tend to have problems associated with the measurement of small values and the fact that the area monitored is not the same as the area through which the emitted, and potentially damaging, light passes.

Compared to such known systems, the present apparatus for monitoring mechanical integrity of an eye-safety component of an illuminator disclosed here has the following advantages:
1. It can precisely probe the area illuminated by the emitter (which is safety critical) as the vibration is transduced close to an area of the eye safety component that is illuminated by the emitter and is configured to travel through said area.
2. It can monitor the mechanical status of the eye-safety component itself (i.e. the glass window).
3. It can be robust to noise, for example, due to the monitoring of a reduced bandwidth from a lock-in detection method and well-defined time window.
4. It is sensitive only to the excitation frequency of the transducer.
5. It can be used to monitor species inside the illuminator package (e.g. to detect leakage or ingress).

Finally, the present apparatus for monitoring mechanical integrity of an eye-safety component of an illuminator disclosed here uses a novel approach at least in that it generates and monitors vibrations to provide an indication of the mechanical integrity of the eye-safety component in the area of primary concern.

### Brief Description of the Preferred Embodiments

Some embodiments of the disclosure will now be described by way of example only and with reference to the accompanying drawings, in which:
Figure 1 shows a block diagram of a device having an illuminator and apparatus in accordance with the present disclosure;
Figure 2 shows a flow chart illustrating a method of monitoring mechanical integrity of an eye-safety component of the illuminator of Figure 1;
Figure 3 shows a side schematic view of a first illuminator in accordance with the present disclosure;
Figure 4 shows a side schematic view of a second illuminator in accordance with the present disclosure;
Figure 5 shows a side schematic view of a third illuminator in accordance with the present disclosure;
Figure 6 shows a side schematic view of a fourth illuminator in accordance with the present disclosure;
Figure 7 shows a side schematic view of a fifth illuminator in accordance with the present disclosure;
Figure 8 shows a timing diagram illustrating different signals generated during pulsed operation of the illuminator of Figure 1; and
Figure 9 shows a second timing diagram illustrating different signals generated during continuous operation of the illuminator of Figure 1.

### Detailed Description of the Preferred Embodiments

Generally speaking, the disclosure provides a method and apparatus for monitoring mechanical integrity of an eye-safety component of an illuminator, which senses vibrations, that are induced by a transducer, passing through a cover glass or window as a means for monitoring whether the window is damaged.

Some examples of the solution are given in the accompanying figures.

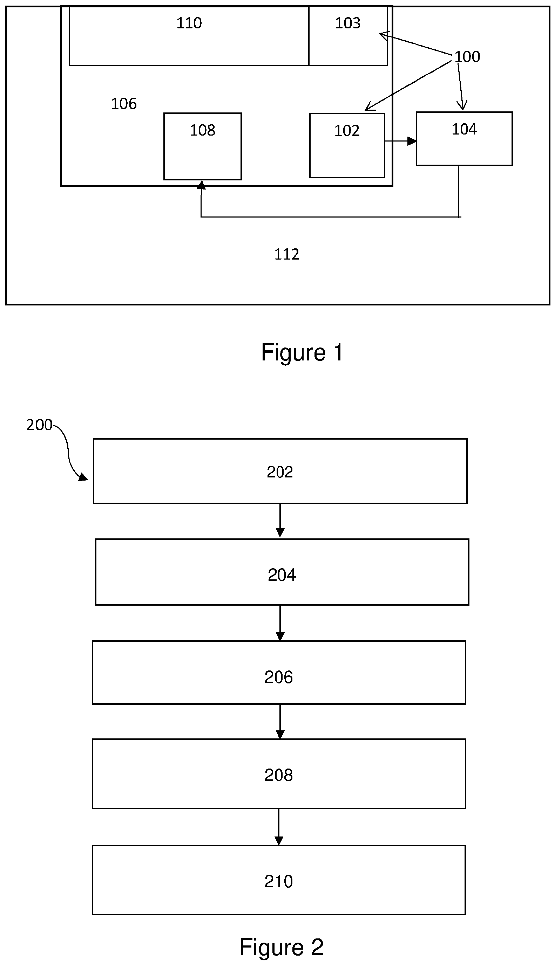

Figure 1 shows a block diagram of a device 112 having an illuminator 106 and apparatus 100 for monitoring mechanical integrity of an eye-safety component 110 of the illuminator 106, in accordance with the present disclosure. The device 112 may be, for example, a cellular telephone, tablet, laptop, watch, or other computing device.

The apparatus 100 comprises a transducer 103, a sensor 102 in the form of a microphone, and a processor 104. The transducer 103 is operable to generate a vibration in the eye-safety component 110. The sensor 102 is operable to sense the vibration in the eye-safety component 110 and to output a signal representative of the sensed vibration. The processor 104 is operable to: monitor the signal from the sensor 102; determine if the signal comprises at least one parameter that falls outside of a pre-determined acceptable range, the pre-determined acceptable range being indicative of mechanical integrity of the eye-safety component 110; and initiate a safety action in response to a determination that the at least one parameter falls outside of the pre-determined acceptable range, thereby indicating a loss of mechanical integrity.

The safety action may comprise transmitting an instruction to the illuminator 106 to modify an intensity of illumination (e.g. to lower the intensity to a safe level) or to cease illumination. The safety action may comprise modifying the wavelength of the illuminator or switching the illumination from continuous to pulsed.

The illuminator 106 comprises an emitter 108 as well as the eye-safety component 110. The eye-safety component 110 is configured to provide a shield between the emitter 108 and a user (not shown). The eye-safety component 110 may comprise a diffuser and/or a transparent window (e.g. cover glass).

Although the processor 104 is shown outside of the illuminator 106, it could be incorporated within the illuminator 106 and may be, for example, provided on an integrated circuit (IC) with the sensor 102, the transducer 103 and/or the emitter 108.

Figure 2 shows a method 200, which may be performed by the processor 104, for monitoring mechanical integrity of the eye-safety component 110. The method 200 comprises a step 202 of operating a transducer to generate a vibration in the eye-safety component 110. The method 200 also comprises a step 204 of obtaining, from the sensor 102, a signal representative of a sensed vibration in the eye-safety component 110 and a step 206 of monitoring the signal. A further step 208 comprises determining if the signal comprises at least one parameter that falls outside of a pre-determined acceptable range, the pre-determined acceptable range being indicative of mechanical integrity of the eye-safety component 110. A subsequent step 210 comprises initiating a safety action in response to a determination that the at least one parameter falls outside of the pre-determined acceptable range thereby indicating a loss of mechanical integrity.

The method may further comprise establishing the pre-determined acceptable range (e.g. a threshold value). The pre-determined acceptable range may be established by a controller, which may be provided in the illuminator or external thereof (for example, in a host device).

The pre-determined acceptable range may be of the following form: up to a predefined value; below a predefined value; between predefined values.

The pre-determined acceptable range may be based on predefined values stored in a memory and/or defined during a calibration step. The predefined values may comprise one or more parameters, which may be adjusted during the calibration step. For example, the parameters may comprise signal amplitude, signal frequency or signal wavelength.

In some embodiments, the pre-determined acceptable range may be established using an artificial neural network (ANN).

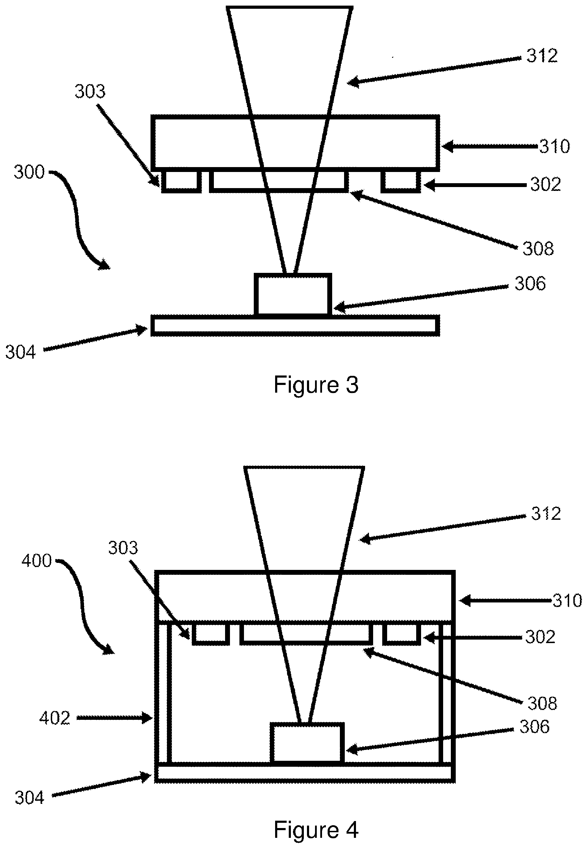

Figure 3 shows a side schematic view of a first (open) illuminator 300 in accordance with the present disclosure. The first illuminator 300 has a similar structure to that of the illuminator 106 and comprises a transducer 303, in the form of a piezoelectric transducer, and a sensor 302, in the form of a microphone.

An emitter 306, in the form of a vertical cavity surface emitting laser (VCSEL), is mounted on a substrate 304 and is arranged to emit light in the form of a laser beam 312 through a diffuser 308 and a glass window 310. Together, the diffuser 308 and glass window 310 form the eye-safety components 110.

Although not shown, a processor (similar to the processor 104 of Figure 1), is provided in communication with the transducer 303, the sensor 302 and the emitter 306.

In this embodiment, the transducer 303 and the sensor 302 are both mounted in direct contact with the glass window 310 of the eye-safety components 110. In other embodiments, the transducer 303, the sensor 302, or both, may be mounted in direct contact with the diffuser 308. In both cases, the transducer 303 and the sensor 302 are located on or close to the eye-safety components 110 to ensure a quick response and good signal quality. Although not shown in Figure 3, metallic traces or other electrical connectors (e.g. wires) may be provided to route electrical signals from the transducer 303 and/or the sensor 302 to the processor and/or emitter 306.

In use, the transducer 303 is operable to generate a vibration in the glass window 310 and the sensor 302 is operable to sense the vibration and to output a signal representative of the sensed vibration to the processor. The processor is operable to: monitor the signal from the sensor 302; determine if the signal comprises at least one parameter that falls outside of a pre-determined acceptable range, the pre-determined acceptable range being indicative of mechanical integrity of the glass window 310; and initiate a safety action in response to a determination that the at least one parameter falls outside of the pre-determined acceptable range, thereby indicating a loss of mechanical integrity.

As above, the safety action may comprise transmitting an instruction to the illuminator 300 to modify an intensity of illumination (e.g. to lower the intensity to a safe level) or to cease illumination. The safety action may comprise modifying the wavelength of the illuminator or switching the illumination from continuous to pulsed.

Figure 4 shows a side schematic view of a second (closed) illuminator 400 in accordance with the present disclosure. The second illuminator 400 is similar to the first illuminator 300 and therefore the same reference numerals are included to indicate similar features. Thus, in addition to the components described above in relation to Figure 3, the second illuminator 400 is housed in a package or module including sidewalls 402 between the substrate 304 and the glass window 310. The second illuminator 400 may therefore be airtight or hermetically sealed and may contain a well-defined fluid (e.g. gas). In which case, the sensor 302 may sense a vibration signal generated in the diffuser and/or glass window 310, after it has travelled through the fluid such that any leaks or fluid ingression can be detected by a change in the vibration signal.

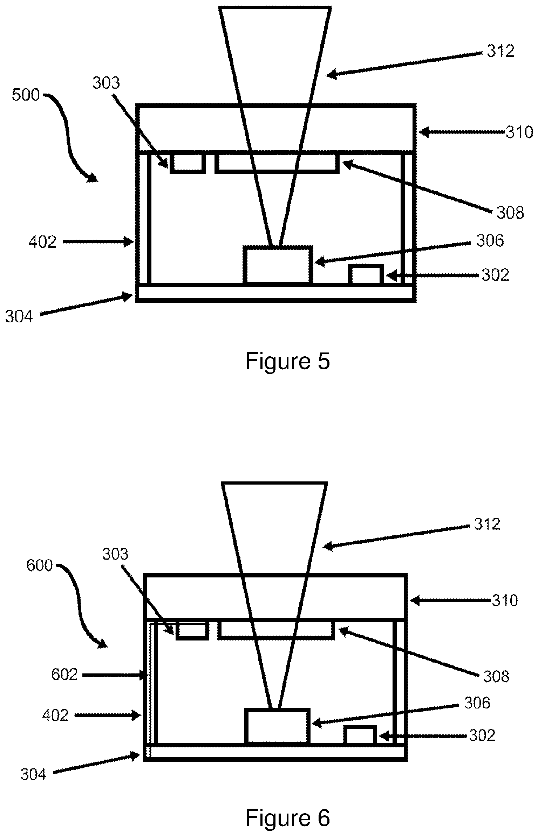

Figure 5 shows a side schematic view of a third (further) illuminator 500 in accordance with the present disclosure. The third illuminator 500 is similar to the second illuminator 400 and therefore the same reference numerals are included to indicate similar features. However, instead of the sensor 302 of Figure 4 being mounted on the glass window 310, in Figure 5, the sensor 302 is mounted on the substrate 304. In some embodiments, both the transducer 303 and the sensor 302 may be mounted on the substrate 304. Although not shown in Figure 5, metallic traces or other electrical connectors (e.g. wires) may be provided to route electrical signals from the transducer 303 to an edge of the illuminator package and along the sidewalls 402 to the substrate 304 on which the emitter 306 (and potentially also the processor) is located.

Figure 6 shows a side schematic view of a fourth (another) illuminator 600 in accordance with the present disclosure. The fourth illuminator 600 is similar to the third illuminator 500 and therefore the same reference numerals are included to indicate similar features. However, in this case, metallic traces (i.e. connectors) 602 providing a path for electrical signals between the transducer 303 and the substrate 304, are shown. In this way, a signal to operate the transducer to induce a vibration may be controlled by a processor provided on the substrate 304. As explained above, the processor will additionally determine if the signal from the sensor 302 comprises at least one parameter that falls outside of a pre-determined acceptable range, the pre-determined acceptable range being indicative of mechanical integrity of the glass window 310. The processor also initiates a safety action in response to a determination that the at least one parameter falls outside of the pre-determined acceptable range, thereby indicating a loss of mechanical integrity. For example, the processor may transmit a trigger to shut-off power to the emitter 306 to prevent further illumination in the case of a loss of integrity of the eye-safety components.

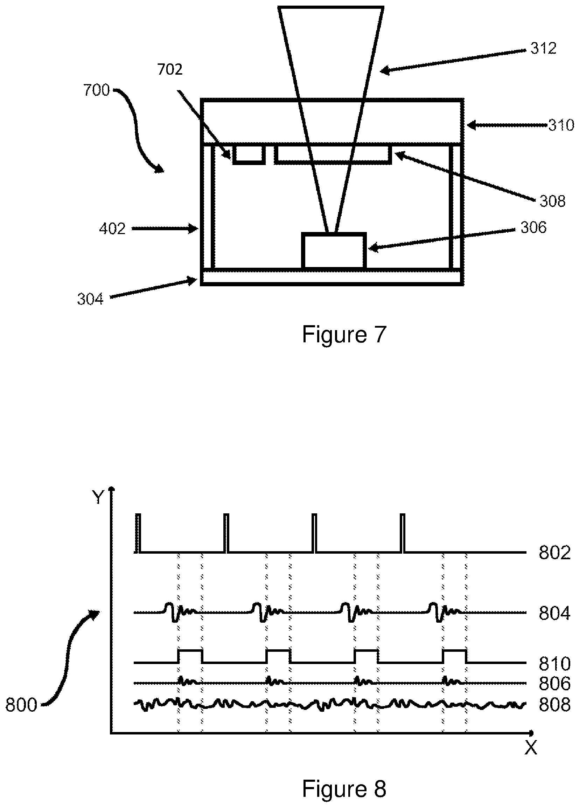

Figure 7 shows a side schematic view of a fifth (combined) illuminator 700 in accordance with the present disclosure. The fifth illuminator 700 is similar to the fourth illuminator 600 and therefore the same reference numerals are included to indicate similar features. However, instead of the transducer 303 and the sensor 302 being separate components, they are combined into one component 702 that performs the functions of both the transducer 303 and sensor 302.

Figure 8 shows a first (pulsed) timing diagram 800 illustrating different signals generated during operation of the illuminator 106 of Figure 1. It will be understood that the illuminators 300, 400, 500, 600 and 700 may also operate in a similar manner. The timing diagram 800 includes an x-axis representing time and a y-axis representing signal amplitude/intensity. Arbitrary units (AU) are shown, as the diagram is for illustrative purposes only. The waveforms shown represent a transducer signal intensity 802, a vibration signal amplitude 804, a gated vibration signal amplitude 806, a noise signal amplitude 808, and a detection gate signal amplitude 810 which are purely illustrative and other shapes of these waveforms may be present in a real device.

The timing diagram 800 shows a pulsed vibration signal 802 from the transducer. This results in a vibration signal 804 that passes through the eye safety components. The vibration signal 804 propagates in the eye-safety components and is transmitted through the sidewalls and enclosed medium. Accordingly, the vibration signal 804 is sensed by the sensor, which is provided either on the eye-safety components or elsewhere in the illuminator. In the present embodiment, a gated detection method is used by generation of the detection gate signal 810, which is timed to isolate a portion of the vibration signal 804, which is denoted as the gated vibration signal 806, and which results from transmission of the vibration signal 804 in the eye-safety components. The gated vibration signal 806, which is sensed by the sensor, is therefore the product of the detection gate signal 810 and the vibration signal 804. In addition, as illustrated in Figure 8, the noise signal 808 is also present.

In the present embodiment, the transducer may not induce vibrations at a resonant frequency of the glass window. Thus, the vibration signal 804 may be relatively small and the resulting gated vibration signal 806 is similarly small.

As shown in Figure 8, the gated vibration signal 806 is delayed in time with respect to the transducer signal 802. This is solely a result of the speed of sound in the medium, and therefore it allows the parameters for the detection gate signal 810 to be easily determined. However, instead of using the detection gate signal 810 as shown in Figure 8, a detection gate signal 810 that fully overlaps the vibration signal 804 could be used.

By monitoring the vibration signal 804 or the gated vibration signal 806, it is possible to check the mechanical integrity of the eye-safety components. As acoustic waves are very sensitive to structural defects, it is possible to observe the status of the eye-safety components any time, while using the transducer.

In some embodiments, the vibration signal amplitude is measured to indicate the mechanical integrity of the eye-safety components. This indication could be found by storing a value for the vibration signal amplitude in memory and comparing this value to a new measured value using the processor. Here, any difference in the values would correspond to a mechanical integrity failure in the eye-safety components. However, the comparison may take into account variability in the values due to system tolerances and therefore an acceptable range may be permitted around a typical value such that the safety action is only triggered when the vibration signal amplitude is outside of the acceptable range.

In some embodiment, the spectral components of the vibration signal could be measured to indicate the mechanical integrity of the eye-safety components. This indication could be found by storing a value for the spectral components, e.g. as found with a Fourier transform, in memory and comparing this value to a new measured value using the processor. As above, any difference in the values (taking into account an acceptable tolerance level) may correspond to a mechanical integrity failure in the eye-safety components.

In some embodiments, a vibration signal decay time could be measured to indicate the mechanical integrity of the eye-safety components. This indication could be found by storing a value for the vibration signal decay time in memory and comparing this value to a new measured value using the processor. Again, any difference in the values (taking into account an acceptable tolerance level) would correspond to a mechanical integrity failure in the eye-safety components.

In some embodiments, the amplitude, voltage or frequency required to drive the transducer could be measured to indicate the mechanical integrity of the eye-safety components. This indication could be found by storing a value for the amplitude, voltage or frequency in memory and comparing these values to new measured values using the processor. As above, any difference in the values (taking into account an acceptable tolerance level) would correspond to a mechanical integrity failure in the eye-safety components.

Although the sensors may comprise standard microphones, a custom-made microelectromechanical system (MEMS) based microphone may be employed to achieve a sensitivity of up to 1-10V/Pa.

Although not shown, a phononic structure may be provided to improve a signal-to-noise ratio of the vibration signal.

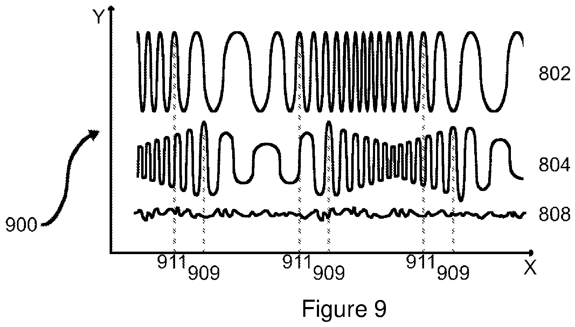

Figure 9 shows a second (continuous) timing diagram 900 illustrating different signals generated during continuous operation of the transducer 103 of Figure 1. The second (continuous) timing diagram 900 is similar to the first (pulsed) timing diagram 800 and therefore the same reference numerals are included to indicate similar features. The timing diagram 900 includes an x-axis representing time and a y-axis representing signal amplitude/intensity. Arbitrary units (AU) are shown, as the diagram is for illustrative purposes only. The waveforms shown represent a transducer signal intensity 802, a vibration signal amplitude 804, and a noise signal amplitude 808, which are purely illustrative and other shapes of these waveforms may be present in a real device.

The timing diagram 900 shows the vibration signal 802 as a continuous signal from the transducer that sweeps a pre-determined frequency range. This results in the vibration signal 804. The vibration signal 804 propagates in the eye-safety components and is also transmitted through the sidewalls and enclosed medium. Accordingly, the vibration signal 804 is sensed by the sensor, which is provided either on the eye-safety components or elsewhere in the illuminator.

The vibration signal 804 is delayed from the transducer signal 802 by an amount of time corresponding to the speed of sound in the eye-safety components. This amount of time is illustrated in figure 9 as a time difference between a label 909 and a label 911. An oscillation frequency of the transducer signal 802 that is closest to a resonant frequency of the window is labelled as 911. The label 909 indicates the same resonant frequency in the vibration signal 804 which is delayed due to the speed of sound in the eye-safety components.

The delay between labels 911 and 909 may be used to indicate the mechanical integrity of the eye-safety components. This indication could be found by storing a value for the time difference between labels 911 and 909 in memory and comparing this value to a new measured value using the processor. Here, any difference in the values (taking into account an acceptable tolerance level) would correspond to a mechanical integrity failure in the eye-safety components.

Similarly, the resonant frequency of the eye-safety components when measured by the sensor (i.e. corresponding to label 909 on the vibration signal 804) could be used to indicate the mechanical integrity of the eye-safety components. This indication could be found by storing a value for the resonant frequency of the vibration signal 804 in memory and comparing this value to a new measured value using the processor. Here, any difference in the values (taking into account an acceptable tolerance level) would correspond to a mechanical integrity failure in the eye-safety components.

In some embodiments, an amplitude of the vibration signal 804 may be used to indicate the mechanical integrity of the eye-safety components. This indication could be found by storing a value for the amplitude of the vibration signal 804 in memory and comparing this value to a new measured value using the processor. Here, any difference in the values (taking into account an acceptable tolerance level) would correspond to a mechanical integrity failure in the eye-safety components.

Thus, examples of the present disclosure provide a method and apparatus, which use mechanical vibrations to probe the mechanical properties of eye-safety components for illuminators, to monitor the integrity of the eye-safety component and to perform a safety action such as a shutdown of the emitter if a change occurs.

Embodiments of the present disclosure can be employed in many different applications including world and front facing illuminators for 3D sensing (using e.g. time of flight (ToF), pattern or stereo approaches) or augmented reality, for example, in gaming, industrial, educational, automotive (e.g. for driver monitoring) and other industries.

### List of reference numerals:

- 100: apparatus
- 102: sensor
- 103: transducer
- 104: processor
- 106: illuminator
- 108: emitter
- 110: eye-safety component
- 112: device

- 200: method
- 202: step 1
- 204: step 2
- 206: step 3
- 208: step 4
- 210: step 5

- 300: first (open) illuminator
- 302: sensor
- 303: transducer
- 304: substrate
- 306: emitter
- 308: diffuser
- 310: glass window
- 312: laser beam

- 400: second (closed) illuminator
- 402: sidewall

- 500: third (further) illuminator

- 600: fourth (another) illuminator
- 602: connection

- 700: fifth (combined) illuminator
- 702: combined transducer and sensor

- 800: signal diagram (pulsed)
- 802: transducer signal intensity
- 804: vibration signal amplitude
- 806: gated vibration signal amplitude
- 808: noise signal amplitude
- 810: detection gate signal amplitude
- 900: signal diagram (continuous)
- 909: resonant frequency of the window when measured by sensor
- 911: resonant frequency of the window when emitted by transducer

The skilled person will understand that in the preceding description and appended claims, positional terms such as 'above', 'along', 'side', etc. are made with reference to conceptual illustrations, such as those shown in the appended drawings. These terms are used for ease of reference but are not intended to be of limiting nature. These terms are therefore to be understood as referring to an object when in an orientation as shown in the accompanying drawings.

Although the disclosure has been described in terms of preferred embodiments as set forth above, it should be understood that these embodiments are illustrative only and that the claims are not limited to those embodiments. Those skilled in the art may be able to make modifications and alternatives in view of the disclosure, that fall within the scope of the invention that is defined by appended claims. Each feature disclosed or illustrated in the present specification may be incorporated in any embodiments, whether alone or in any appropriate combination with any other feature disclosed or illustrated herein.

### References

Further background information relating to the present disclosure is referenced below.
1. Applications of photoacoustic sensing techniques, A. C. Tam, Reviews of Modern Physics, Vol 58, No. 2, p.381-431 (1986)
2. Optimized Capacitive MEMS Microphone for Photoacoustic Spectroscopy (PAS) Applications, 10.1117/12.597136, Pedersen et al. (2005).
3. https://phys.org/news/2019-01-technology-lasers-transmit-audible-messages.html
4. Progress in Photothermal and Acoustic Science and Technology, Life and Earth Sciences, A. Mandelis and P. Hess, SPIE (1997).
5. Surface crack detection with low-cost photoacoustic imaging system, https://doi.org/10.14716/ijtech.v9i1.1506

## Claims

1. An apparatus (100) for monitoring mechanical integrity of an eye-safety component (110) of an illuminator (106), the apparatus comprising:
a transducer (103) operable to generate a vibration in the eye-safety component;
and
a sensor (102) operable to sense the vibration in the eye-safety component and to output a signal representative of the sensed vibration; and
a processor (104) operable to:
monitor the signal from the sensor;
determine if the signal comprises at least one parameter that falls outside of a pre-determined acceptable range, the pre-determined acceptable range being indicative of mechanical integrity of the eye-safety component; and
initiate a safety action in response to a determination that the at least one parameter falls outside of the pre-determined acceptable range thereby indicating a loss of mechanical integrity.

2. The apparatus of claim 1 wherein the transducer is also the sensor.

3. The apparatus of claim 1 or 2 further comprising a phononic structure provided in, on, at, adjacent, around or interlaced with the eye-safety component to improve a signal to noise ratio for the sensed vibration.

4. The apparatus of any preceding claim wherein the processor is further operable to detect a change in environmental conditions within the illuminator based on the signal from the sensor.

5. The apparatus of any preceding claim wherein the processor is operable to initiate the safety action by transmitting an instruction to the illuminator to modify an intensity of illumination.

6. The apparatus of any preceding claim wherein the processor is operable to initiate the safety action by transmitting an instruction to the illuminator to cease illumination.

7. The apparatus of any preceding claim wherein the sensor comprises at least one of: a microphone; an ultrasonic transducer; a piezoelectric transducer or a resonant ultrasound spectroscopic sensor.

8. The apparatus of any preceding claim wherein the vibration is at a pre-determined frequency and wherein the processor is operable to use the pre-determined frequency in a lock-in detection method and/or a gated detection method when monitoring the signal from the sensor.

9. The apparatus of any preceding claim further comprising one or more of: a signal generator, an amplifier; a filter; a lock-in detector; and an acceptable range detector.

10. An illuminator comprising:
at least one emitter;
an eye-safety component providing a shield between the at least one emitter and a user; and
the apparatus according to any preceding claim.

11. The illuminator of claim 10 wherein the sensor is arranged to sense the vibration in the eye-safety component directly.

12. The illuminator of claim 10 wherein the sensor is arranged to sense the vibration in the eye-safety component indirectly by receiving an input via a waveguide or other medium.

13. The illuminator of any of claims 10 to 12 wherein the at least one emitter comprises a laser.

14. The illuminator of any of claims 10 to 13 wherein the eye-safety component comprises a glass substrate and/or a diffuser.

15. A device comprising an apparatus according to any one of claims 1 to 9 or an illuminator according to any one of claims 10 to 14.

16. A method (200) for monitoring mechanical integrity of an eye-safety component of an illuminator, the method comprising:
operating (202) a transducer to generate a vibration in the eye-safety component;
obtaining (204), from a sensor, a signal representative of a sensed vibration in the eye-safety component;
monitoring (206) the signal;
determining (208) if the signal comprises at least one parameter that falls outside of a pre-determined acceptable range, the pre-determined acceptable range being indicative of mechanical integrity of the eye-safety component; and
initiating (210) a safety action in response to a determination that the at least one parameter falls outside of the pre-determined acceptable range thereby indicating a loss of mechanical integrity.

17. The method of claim 16 further comprising establishing the pre-determined acceptable range using an artificial neural network.

18. A non-transitory computer-readable medium having stored thereon program instructions for causing at least one processor of claim 1 to perform the method according to claim 16 or 17.

## Patentansprüche

1. Vorrichtung (100) zum Überwachen mechanischer Integrität einer Augensicherheitskomponente (110) eines Beleuchters (106), wobei die Vorrichtung Folgendes umfasst:
einen Wandler (103), betreibbar zum Erzeugen einer Vibration in der Augensicherheitskomponente; und
einen Sensor (102), betreibbar zum Erfassen der Vibration in der Augensicherheitskomponente und zum Ausgeben eines Signals, das die erfasste Vibration repräsentiert; und
einen Prozessor (104), betreibbar zum:
Überwachen des Signals von dem Sensor;
Bestimmen, ob das Signal mindestens einen Parameter umfasst, der außerhalb eines vorbestimmten Akzeptanzbereichs fällt, wobei der vorbestimmte Akzeptanzbereich eine mechanische Integrität der Augensicherheitskomponente angibt; und
Einleiten einer Sicherheitsaktion als Reaktion auf eine Bestimmung, dass der mindestens eine Parameter außerhalb des vorbestimmten Akzeptanzbereichs fällt, wodurch ein Verlust mechanischer Integrität angezeigt wird.

2. Vorrichtung nach Anspruch 1, wobei der Wandler auch der Sensor ist.

3. Vorrichtung nach Anspruch 1 oder 2, ferner umfassend eine phononische Struktur, vorgesehen in der, auf der, an der, angrenzend an die, herum um die oder verwoben mit der Augensicherheitskomponente, um ein Signal-Rausch-Verhältnis für die erfasste Vibration zu verbessern.

4. Vorrichtung nach einem vorhergehenden Anspruch, wobei der Prozessor betreibbar ist zum Detektieren einer Änderung von Umgebungsbedingungen innerhalb des Beleuchters auf der Grundlage des Signals von dem Sensor.

5. Vorrichtung nach einem vorhergehenden Anspruch, wobei der Prozessor betreibbar ist zum Einleiten der Sicherheitsaktion durch Senden einer Anweisung an den Beleuchter, eine Intensität der Beleuchtung zu modifizieren.

6. Vorrichtung nach einem vorhergehenden Anspruch, wobei der Prozessor betreibbar ist zum Einleiten der Sicherheitsaktion durch Senden einer Anweisung an den Beleuchter, eine Beleuchtung abzubrechen.

7. Vorrichtung nach einem vorhergehenden Anspruch, wobei der Sensor umfasst: ein Mikrofon und/oder einen Ultraschallwandler und/oder einen piezoelektrischen Wandler und/oder einen spektroskopischen Ultraschall-Resonanz-Sensor.

8. Vorrichtung nach einem vorhergehenden Anspruch, wobei die Vibration bei einer vorbestimmten Frequenz liegt, und wobei der Prozessor betreibbar ist zum Verwenden der vorbestimmten Frequenz in einem Verfahren zur Lock-In-Detektion und/oder einem Verfahren zur getasteten Detektion, wenn das Signal von dem Sensor überwacht wird.

9. Vorrichtung nach einem vorhergehenden Anspruch, ferner umfassend: einen Signalgenerator und/oder einen Verstärker und/oder ein Filter und/oder einen Lock-In-Detektor und/oder einen Akzeptanzbereichsdetektor.

10. Beleuchter, der Folgendes umfasst:
mindestens einen Emitter;
eine Augensicherheitskomponente, die einen Schutzschirm zwischen dem mindestens einen Emitter und einem Benutzer bereitstellt; und
die Vorrichtung nach einem vorhergehenden Anspruch.

11. Beleuchter nach Anspruch 10, wobei der Sensor eingerichtet ist zum direkten Erfassen der Vibration in der Augensicherheitskomponente.

12. Beleuchter nach Anspruch 10, wobei der Sensor eingerichtet ist zum indirekten Erfassen der Vibration in der Augensicherheitskomponente durch Empfangen einer Eingabe über einen Wellenleiter oder ein anderes Medium.

13. Beleuchter nach einem der Ansprüche 10 bis 12, wobei der mindestens eine Emitter einen Laser umfasst.

14. Beleuchter nach einem der Ansprüche 10 bis 13, wobei die Augensicherheitskomponente ein Glassubstrat und/oder einen Diffusor umfasst.

15. Einrichtung, die eine Vorrichtung nach einem der Ansprüche 1 bis 9 oder einen Beleuchter nach einem der Ansprüche 10 bis 14 umfasst.

16. Verfahren (200) zum Überwachen mechanischer Integrität einer Augensicherheitskomponente eines Beleuchters, wobei das Verfahren Folgendes umfasst:
Betreiben (202) eines Wandlers zum Erzeugen einer Vibration in der Augensicherheitskomponente;
Erhalten (204), von einem Sensor, eines Signals, das eine erfasste Vibration in der Augensicherheitskomponente repräsentiert;
Überwachen (206) des Signals;
Bestimmen (208), ob das Signal mindestens einen Parameter umfasst, der außerhalb eines vorbestimmten Akzeptanzbereichs fällt, wobei der vorbestimmte Akzeptanzbereich eine mechanische Integrität der Augensicherheitskomponente angibt; und
Einleiten (210) einer Sicherheitsaktion als Reaktion auf eine Bestimmung, dass der mindestens eine Parameter außerhalb des vorbestimmten Akzeptanzbereichs fällt, wodurch ein Verlust mechanischer Integrität angezeigt wird.

17. Verfahren nach Anspruch 16, ferner umfassend Erstellen des vorbestimmten Akzeptanzbereichs unter Verwendung eines künstlichen neuronalen Netzes.

18. Nichtflüchtiges computerlesbares Medium, das darauf Programmanweisungen gespeichert hat zum Veranlassen mindestens eines Prozessors nach Anspruch 1 zum Durchführen des Verfahrens nach Anspruch 16 oder 17.

## Revendications

1. Appareil (100) de surveillance de l'intégrité mécanique d'un élément de sécurité oculaire (110) d'un illuminateur (106), l'appareil comprenant :
un transducteur (103) exploitable pour générer une vibration dans le composant de sécurité oculaire ;
et
un capteur (102) exploitable pour détecter la vibration dans le composant de sécurité oculaire et délivrer un signal représentatif de la vibration détectée ; et
un processeur (104) exploitable pour :
surveiller le signal en provenance du capteur ;
déterminer que le signal comprend ou non au moins un paramètre situé en dehors d'une plage acceptable prédéterminée, la plage acceptable prédéterminée étant indicative de l'intégrité mécanique du composant de sécurité oculaire ; et
lancer une mesure de sécurité en réponse à la détermination que l'au moins un paramètre se situe en dehors de la plage acceptable prédéterminée, ce qui indique une perte d'intégrité mécanique.

2. Appareil selon la revendication 1 dans lequel le transducteur est également le capteur.

3. Appareil selon la revendication 1 ou 2 comprenant en outre une structure phononique fournie dans, sur, au niveau du, adjacente au, autour du ou entrelacée avec le composant de sécurité oculaire pour améliorer un rapport signal/bruit de la vibration détectée.

4. Appareil selon toute revendication précédente dans lequel le processeur est exploitable en outre pour détecter un changement de conditions environnementales dans l'illuminateur en fonction du signal en provenance du capteur.

5. Appareil selon toute revendication précédente dans lequel le processeur est exploitable pour lancer la mesure de sécurité en transmettant à l'illuminateur une instruction de modifier une intensité d'illumination.

6. Appareil selon toute revendication précédente dans lequel le processeur est exploitable pour déclencher la mesure de sécurité en transmettant à l'illuminateur une instruction de cesser l'illumination.

7. Appareil selon toute revendication précédente dans lequel le capteur comprend au moins : un microphone ; un transducteur à ultrasons; un transducteur piézoélectrique ou un capteur spectroscopique à ultrasons résonant.

8. Appareil selon toute revendication précédente dans lequel la vibration est à une fréquence prédéterminée et dans lequel le processeur est exploitable pour utiliser la fréquence prédéterminée dans un procédé de détection synchrone et/ou un procédé de détection périodique lors de la surveillance du signal en provenance du capteur.

9. Appareil selon toute revendication précédente comprenant en outre un ou plusieurs : générateur de signaux ; amplificateur ; filtre ; détecteur synchrone ; et détecteur de plage acceptable.

10. Illuminateur comprenant :
au moins un émetteur ;
un composant de sécurité oculaire servant de bouclier entre l'au moins un émetteur et un utilisateur ; et
l'appareil selon toute revendication précédente.

11. Illuminateur selon la revendication 10 dans lequel le capteur est disposé pour détecter directement la vibration dans le composant de sécurité oculaire.

12. Illuminateur selon la revendication 10 dans lequel le capteur est disposé pour détecter indirectement la vibration dans le composant de sécurité oculaire en recevant une entrée par l'intermédiaire d'un guide d'ondes ou d'un autre support.

13. Illuminateur selon l'une quelconque des revendications 10 à 12 dans lequel l'au moins un émetteur comprend un laser.

14. Illuminateur selon l'une quelconque des revendications 10 à 13 dans lequel le composant de sécurité oculaire comprend un substrat en verre et/ou un diffuseur.

15. Dispositif comprenant un appareil selon l'une quelconque des revendications 1 à 9 ou un illuminateur selon l'une quelconque des revendications 10 à 14.

16. Procédé (200) de surveillance de l'intégrité mécanique d'un composant de sécurité oculaire d'un illuminateur, le procédé comprenant :
l'exploitation (202) d'un transducteur pour générer une vibration dans le composant de sécurité oculaire ;
l'obtention (204), en provenance d'un capteur, d'un signal représentatif d'une vibration détectée dans le composant de sécurité oculaire ;
la surveillance (206) du signal ;
la détermination (208) que le signal comprend au moins un paramètre situé en dehors d'une plage acceptable prédéterminée, la plage acceptable prédéterminée étant indicative de l'intégrité mécanique du composant de sécurité oculaire ; et
le lancement (210) d'une mesure de sécurité en réponse à la détermination que l'au moins un paramètre est situé à l'extérieur de la plage acceptable prédéterminée, ce qui indique une perte d'intégrité mécanique.

17. Procédé selon la revendication 16 comprenant en outre l'établissement de la plage acceptable prédéterminée à l'aide d'un réseau neuronal artificiel.

18. Support non transitoire lisible par ordinateur sur lequel sont stockées des instructions de programme pour amener l'au moins un processeur selon la revendication 1 à réaliser le procédé selon la revendication 16 ou 17.
